# EUROPÄISCHE PATENTSCHRIFT

(11) **EP 4 222 845 B1**
(45) Veröffentlichungstag und Bekanntmachung des Hinweises auf die Patenterteilung: **15.07.2026**
(21) Anmeldenummer: 21786383.6
(22) Anmeldetag: 29.09.2021
(51) Int. Cl.: H02K 7/18, H02K 21/26, H02K 7/00, H02K 7/10, H02K 11/20, H02K 11/35

(54) **KUPPLUNG ODER WELLENVERBINDUNGSVORRICHTUNG**
COUPLING OR SHAFT CONNECTION DEVICE
DISPOSITIF D'ACCOUPLEMENT OU DE RACCORDEMENT D'ARBRE

(30) Priorität: 30.09.2020 DE 102020212400
(43) Veröffentlichungstag der Anmeldung: 09.08.2023
(73) Patentinhaber: Fraunhofer-Gesellschaft zur Förderung der angewandten Forschung e.V., 80686 München (DE)
(72) Erfinder: SPIES, Peter, 91058 Erlangen (DE); DRÄGER, Tobias, 91058 Erlangen (DE); KNAUER, Johannes, 91058 Erlangen (DE); ZESSIN, Henrik, 91058 Erlangen (DE); THALMANN, Sandro, 91058 Erlangen (DE); HAALA, Oliver, 91058 Erlangen (DE); RENTZSCH, Hendrik, 09126 Chemnitz (DE)
(74) Vertreter: Pfitzner, Hannes
(86) Internationale Anmeldenummer: PCT/EP2021/076807
(87) Internationale Veröffentlichungsnummer: WO 2022/069549

(56) Entgegenhaltungen:
- EP-A1- 2 738 934
- WO-A1-2009/034321
- US-A1- 2019 341 822
- US-A1- 2020 130 435
- US-B1- 9 304 142
- TZERN T TOH ET AL: "A continuously rotating energy harvester with maximum power point tracking", JOURNAL OF MICROMECHANICS AND MICROENGINEERING, INSTITUTE OF PHYSICS PUBLISHING, BRISTOL, GB, vol. 18, no. 10, 1 October 2008 (2008-10-01), pages 104008, XP020144991, ISSN: 0960-1317, DOI: 10.1088/0960-1317/18/10/104008

## Beschreibung

Ausführungsbeispiele der vorliegenden Erfindung beziehen sich auf eine Kupplung oder Wellenverbindungsvorrichtung mit einem rotierenden Element. Weitere Ausführungsbeispiele beziehen sich auf ein System umfassend eine Achse in Verbindung mit Kupplung oder Wellenverbindungsvorrichtung. Entsprechend Ausführungsbeispielen sind in der Kupplung beziehungsweise dem rotierenden Element Mittel zum Energie-Harvesting vorgesehen, um z.B. eine Elektronik zu betreiben.

Bei zahlreichen mechanischen Komponenten, wie zum Beispiel Kupplungen in Form von rotierenden Elementen, besteht der Bedarf Elektronik zu integrieren. Diese Elektronik kann beispielsweise dazu ausgelegt sein, um eine Sensorüberwachung durchzuführen. Aufgrund der häufig vorkommenden Bewegung bzw. Rotation von rotierenden Elementen ist das Ein- und Auskoppeln von Energie und Information problematisch.

Einige Punkte sind bereits in der Patentliteratur diskutiert. So formen die Veröffentlichungen EP 2738934 A1, US 9304142 B1 und US 2020/130435 A1 Stand der Technik. Darüber hinaus ist auch die Veröffentlichung mit dem Titel "A continuously rotating energy harvester with maximum power point tracking" als Stand der Technik zu nennen. Aus der US 2019/341822 A1 ist zudem ein Energieerzeuger für eine Antriebsachse bekannt.

Aufgabe der vorliegenden Erfindung ist es, bei rotierenden Elementen, wie zum Beispiel Kupplungen, die Integration von Elektronikkomponenten zu verbessern.

Die Aufgabe wird durch den unabhängigen Patentanspruch gelöst.

Ausführungsbeispiele der vorliegenden Erfindung schaffen ein rotierendes Element mit einem rotierenden sowie einem statischen Körper. Ein erster der zwei Körper, das heißt also, der rotierende Körper oder der statische Körper, weist eine Induktivität sowie einen Verbraucher auf. Ein zweiter der zwei Körper, das heißt also, der andere Körper (entweder statischer Körper oder rotierender Körper), weist ein oder mehrere Magnete auf. Der statische Körper ist gegenüber dem rotierenden Körper derart gelagert, dass der statische Körper bei Rotation des rotierenden Elements eine Relativbewegung gegenüber dem rotierenden Körper ausführt. Unter der Relativbewegung ist beispielsweise eine Bewegung zu verstehen, bei der der statische Körper gar keine Bewegung ausgehend von der Rotation des rotierenden Elements durchführt oder eine nacheilende Bewegung mit reduzierter Umdrehungszahl oder eben eine andere Bewegung als der rotierende Körper. Der rotierende Körper hingegen führt entsprechend Ausführungsbeispielen die gleiche Bewegung wie das rotierende Element aus. Die Induktivität ist ausgebildet, bei Bewegung gegenüber einem Magnetfeld - bereitgestellt durch die Magneten - eine elektrische Energie bereitzustellen, wobei der Verbraucher durch die elektrische Energie betreibbar ist.

Ausführungsbeispielen der vorliegenden Erfindung liegt die Kenntnis zugrunde, dass es bei rotierenden Elementen, wie zum Beispiel Kupplungen, bei denen kein externes Magnetfeld anlegbar ist, durch Verwendung eines statischen beziehungsweise quasi statischen Körpers möglich ist, eine Relativbewegung zwischen Magnet und Induktivität zu erzeugen, um ausgehend von dieser Relativbewegung ein Energie Harvesting zu betreiben. Mit der Induktivität, die beispielsweise als Spule ausgebildet sein kann, ist dann ein elektrischer Verbraucher, wie zum Beispiel ein elektrischer Verbraucher, der eine Sensorik oder eine Aktorik oder ein Funkmodul oder eine Kombination daraus aufweist, verbunden, um mit Energie versorgt zu werden. Vorteilhaft ist, dass durch diese Ausführung ein elektrischer Verbraucher mit Energie versorgt werden kann, ohne dass Schleifkontakte oder ähnliches eingesetzt werden müssen.

Der statische Körper kann ausgehend von mehreren grundlegenden Varianten gebremst werden. Entsprechend einer ersten Variante wäre es entsprechend einem Ausführungsbeispiel denkbar, dass der statische Körper mit einem Gewicht oder einem exzentrischen Gewicht gekoppelt ist, das bei Rotation einerseits träge reagiert und andererseits eben durch die Gewichtskraft gebremst wird. Je nachdem, ob das Gewicht exzentrisch angeordnet ist und wie die Rotationsbewegung (vertikal oder horizontal als Extrembeispiele) verläuft, kann sich eine nacheilende Relativbewegung einstellen oder sogar der statische Körper in Ruhe verharren, während der rotierende Körper die Rotation des rotierenden Elements ausführt. Entsprechend einem weiteren Ausführungsbeispiel wäre es denkbar, dass der statische Körper mit einer Bremse, wie zum Beispiel einer Verwirbelungsbremse, Wirbelstrombremse oder einer Magnetbremse, gekoppelt ist. Die Verwirbelungsbremse ist beispielsweise ausgebildet, um durch eine aerodynamische oder hydrodynamische Interaktion gegenüber einer Rotation des rotierenden Elements gebremst zu werden. Denkbar wären beispielsweise Flügelräder außen um den rotierenden Körper, wenn man davon ausgeht, dass der statische Körper sich im Außenbereich des rotierenden Elements befindet oder auch Flügelräder, die im Inneren die Rotation bremsen. Diese aerodynamische Bremse kann durch gegenläufige Flügelräder optimiert werden, wenn beispielsweise der aerodynamische Strom durch den rotierenden Körper entgegen einem aerodynamischen Strom von dem statischen Körper bewegt wird. Entsprechend Ausführungsbeispielen wäre dieser Vorgang durch die Wahl eines Fluid optimierbar. Die Wirbelstrombremse kann beispielweise ausgehend von einem selbstinduzierten Strom eine Bremskraft erzeugen. Die Magnetbremse ermöglicht, dass entweder eine magnetische Interaktion mit dem rotierenden Element oder eine magnetische Interaktion mit einem externen Element, wie zum Beispiel einem externen Metallkörper oder einem externen Magnetkörper, erfolgt, so dass das statische Element gebremst wird.

Bezüglich der Anordnung sei angemerkt, dass entsprechend Ausführungsbeispielen das Gewicht, exzentrische Gewicht, die Verwirbelungsbremse, Wirbelstrombremse oder Magnetbremse in axialer Richtung gesehen, angrenzend beziehungsweise neben dem statischen Körper angeordnet und mit diesem gekoppelt ist. Beispielsweise können der statische Körper sowie das exzentrische Gewicht auf einer Welle gelagert sein, wobei sich der rotierende Körper um diese Welle bewegt. Entsprechend Ausführungsbeispielen sind der statische Körper und der rotierende Körper konzentrisch zueinander angeordnet. Beispielsweise ist der innere Körper der statische Körper, während der äußere Körper durch den rotierenden Körper geformt ist. Der rotierende Körper ist gegenüber dem statischen Körper gelagert, z. B. durch eine Welle mit oder ohne zusätzliche Lager, wie zum Beispiel Gleitlager, Kugellager, magnetische Lager, etc. Auch sei an dieser Stelle angemerkt, dass nicht nur eine Welle, sondern auch mehrere Wellen zum Einsatz kommen könnten.

Entsprechend Ausführungsbeispielen sei, wie bereits oben schon angedeutet, darauf hingewiesen, dass der Verbraucher beispielsweise eine Elektronik aufweisen kann. Ein Beispiel hierfür wäre eine Sensorik, die ausgebildet ist, eine Information, z. B. einen Messwert, auszugeben. Beispiele für zu sensierende physikalische Größen sind eine Kraft, eine Schwingung, eine Akustik, eine mechanische Spannung, eine Temperatur, ein Drehmoment, eine Drehzahl oder eine Beschleunigung. Die Sensorik kann entsprechend Ausführungsbeispielen auch die Induktivität mitnutzen beziehungsweise die Induktivität fungiert als Sensorik und ist ausgebildet, ausgehend von dem induzierten Signal beziehungsweise induziertem Strom der Induktivitäten, ein Messsignal bereitzustellen, das einen Rückschluss auf eine physikalische Größe, wie zum Beispiel die Drehzahl oder die Vibration, zulässt. Entsprechend Ausführungsbeispielen weist die Elektronik ein Funkmodul auf, mittels dieses Funkmoduls kann dann die Information, z. B. eine Sensorinformation, nach extern übertragen werden. Auch kann entsprechend einem weiteren Ausführungsbeispiel eine Aktorik als Teil des Verbrauchs, wie zum Beispiel ein Ultraschallaktor oder ein Stellglied, Verwendung finden.

Entsprechend einem weiteren Ausführungsbeispiel wäre es auch denkbar, dass eine Anzeige, wie zum Beispiel eine LED-Anzeige, vorgesehen ist, die eine Information bezüglich eines Status, zum Beispiel eines Fehlers oder einer Überlast oder ähnliches, ausgibt. Die LED kann optisch sein, das heißt, z. B. farbkodiert, wobei auch akustische Anzeigen, die einen Warnton ausgeben, denkbar wären.

Bezüglich der Anordnung der Induktivitäten sei darauf hingewiesen, dass entsprechend bevorzugten Ausführungsbeispielen die Induktivitäten als Spulen ausgeführt sein können. Ebenso kommen Spulen mit Ferritkern zum Einsatz. Bevorzugter Weise ist nicht nur eine Induktivität, sondern mehrere Induktivitäten in Form von Spulen vorgesehen, die dann translatorisch um eine Rotationsachse des rotierenden Elements verteilt oder sogar gleich verteilt angeordnet sind. Entsprechend einer bevorzugten Variante ist durch die Anzahl der Induktivitäten sowie die Dimensionierung der Induktivitäten und auch durch die Dimensionierung der Magnete, die bereitgestellte elektrische Energie skalierbar. Bei großen rotorischen Elementen (großen Kupplungen) können mehrere und größere Induktivitäten/Magnete verwendet werden, um eine höhere elektrische Energie zu harvesten. Diese Skalierbarkeit stellt einen besonderen Vorteil dar. Bezüglich der Anordnung der Magnete sei angemerkt, dass diese entsprechend Ausführungsbeispielen ebenso rotorisch um den ersten der zwei Körper angeordnet sind beziehungsweise um die Rotationsachse. Entsprechend einem Ausführungsbeispiel kommen abwechselnd polarisierte Magnete oder Magnete in Form eines Halbach-Arrays zum Einsatz.

Die Erfindung schafft eine Kupplung oder eine Wellenverbindungsvorrichtung, wobei die Wellenverbindungsvorrichtung eine erste und eine zweite Stirnseite aufweist. Gemäß einem Ausführungsbeispiel wird eine Achse geschaffen, die zwei Teile aufweist, die mit der Kupplung beziehungsweise der Wellenverbindungsvorrichtung verbunden sind.

Weitere Bildungen sind in den Unteransprüchen definiert. Ausführungsbeispiele der vorliegenden Erfindung werden anhand der beiliegenden Zeichnung erläutert. Es zeigen:
- Fig. 1: eine schematische Darstellung eines rotorischen Elements, wie zum Beispiel einer Kupplung, gemäß einem Basisausführungsbeispiel;
- Fig. 2a-f: schematische Darstellungen von rotorischen Elementen gemäß erweiterten Ausführungsbeispielen;
- Fig. 3a und 3b: schematische Diagramme zur Illustration von möglichen Anordnungen von Spulen und Magneten sowie den resultierenden geharvesteten Leistungen; und
- Fig. 4a-d: eine schematische Darstellungen von alternativen Bremsanordnungen.

Bevor nachfolgend Ausführungsbeispiele der vorliegenden Erfindung erläutert werden, sei darauf hingewiesen, dass gleichwirkende Elemente und Strukturen mit den gleichen Bezugszeichen versehen sind, so dass die Beschreibung derer aufeinander anwendbar beziehungsweise austauschbar ist.

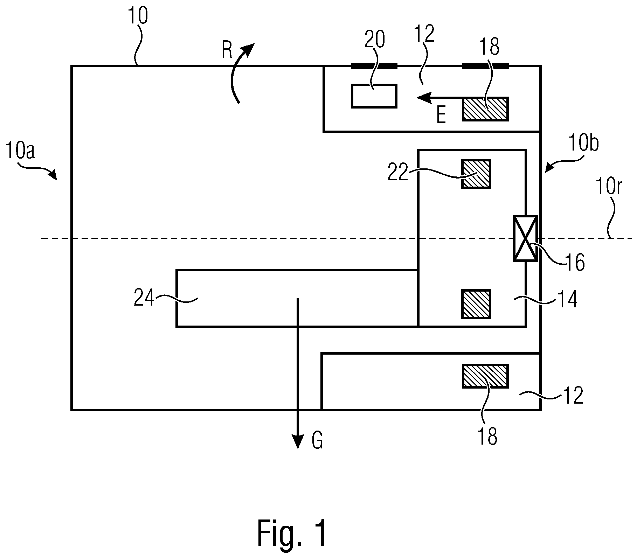

Fig. 1 zeigt einen rotorischen Körper 10, wie zum Beispiel eine Kupplung, mit einer ersten Seite 10a und einer zweiten Seite 10b. Die erste Seite 10a kann beispielsweise ein Antrieb und die zweite Seite 10b ein Abtrieb sein, so dass eine Rotation beziehungsweise ein Rotationsmoment von 10a nach 10b übertragen werden kann. Die Rotation ist mit dem Bezugszeichen R versehen. Dieses rotierende Element 10 umfasst zwei Körper, nämlich einen rotierenden Körper 12 sowie einen statischen Körper 14. Der statische Körper 14 heißt deshalb statischer Körper, weil er ausgebildet ist, bei Rotation R des rotierenden Elements 10 beziehungsweise des rotierenden Körpers 12 in Ruhe zu verharren beziehungsweise allgemein eine Relativbewegung gegenüber dem rotierenden Element 10 beziehungsweise dem rotierenden Körper 12 durchzuführen. Hierzu ist entsprechend Ausführungsbeispielen der statische Körper 14 gegenüber dem rotierenden Körper 12 gelagert, was anhand des Lagers 16 illustriert ist. Wie genau die Lagerung ausgeführt ist (Kugellager, Rollenlager, Gleitlager oder magnetisches Lager), wird an dieser Stelle nicht genauer spezifiziert, ebenso wenig, wie der Ort der Lagerung.

Einer der zwei Körper 12 oder 14 weist eine Induktivität 18 sowie einen Verbraucher 20 auf, während ein anderer der zwei Körper 12 oder 14 ein oder mehrere Magnete 22 aufweist. In diesem Ausführungsbeispiel sind die Magnete 22 Teil des statischen Körpers 14, während die Induktivitäten 18 Teil des rotierenden Körpers 12 sind. In demselben Körper wie die Induktivitäten 18 ist auch der Verbraucher 20 angeordnet.

Entsprechend einem Ausführungsbeispiel kann der statische Körper 14 dadurch in Ruhe oder in einer Relativbewegung zu der Bewegung R verharren, indem der statische Körper mit Bremsmitteln, hier einem Gewicht 24, gekoppelt ist. Das Gewicht ist beispielsweise in axialer Richtung (vgl. Rotationsachse 10r) angrenzend zu dem statischen Körper 14 angeordnet. Das Gewicht 24 ist hier exzentrisch, das heißt also, exzentrisch in Bezug auf die Rotationsachse 10r angeordnet und wird durch die Gewichtskraft G nach unten gezogen. Dadurch bewegt sich rein theoretisch, bei idealer Lagerung 16 der statische Körper 14 nicht zusammen mit der Rotation 10r. Da auch bei optimalen Lagern 16 eine Reibung nicht auszuschließen ist, wird gegebenenfalls der statische Körper 14 zusammen mit dem Gewicht 24 rotieren, wobei sich dennoch aufgrund der Bremskraft eine Relativbewegung gegenüber 12 einstellt. Durch die Relativbewegung des statischen Körpers 14 gegenüber dem rotorischen Körper 12 bewegen sich die Spulen 18 in dem durch die Magnete 22 bereitgestellten Magnetfeld. Hierdurch kommt es zu einer Induktion eines Stromes beziehungsweise zum Harvesten der Energie E. Diese Energie E wird dem Verbraucher 20 bereitgestellt.

Der Verbraucher kann sich somit in dem rotierenden Element 12 befinden und mit Energie versorgt werden, ohne dass externe Kabel oder Schleifer notwendig sind. Entsprechend Ausführungsbeispielen kann der Verbraucher 20 eine Sensorik und/oder einen Prozessor zur Verarbeitung der Sensordaten und/oder ein Funkmodul (wie zum Beispiel basierend auf einem der folgenden Standards: UWIN, Bluetooth, BLE oder Analogfunk) zur Übertragung der Sensordaten aufweisen. Bezüglich des Sensors sei angemerkt, dass dieser unterschiedliche physikalische Messgrößen, wie zum Beispiel eine Temperatur, eine Drehzahl, ein Drehmoment, ein Übertragungsmoment, eine Vibration, etc., ermitteln kann. Alternativ wäre es denkbar, dass auch eine Aktorik, wie zum Beispiel eine Bedienung, integriert ist, die in Abhängigkeit von Sensordaten oder in Abhängigkeit von einem extern per Funk erhaltenen Signal, die entsprechende Aktion durchführt.

Auch wenn bei obigen Ausführungsbeispielen insbesondere davon ausgegangen worden ist, dass das rotierende Element eine Kupplung oder ähnliches darstellt, sei darauf hingewiesen, dass diese Anwendung nicht zwingend erforderlich ist. Vorteilhaft bei dem rotierenden Element ist, dass die Rotationsenergie der Rotation R in elektrische Energie gewandelt werden kann, ohne dass ein extern befestigter ruhender Pol, der beispielsweise das Magnetfeld trägt, verwendet wird. Bei obigen Ausführungsbeispielen wurde davon ausgegangen, dass der statische Körper 14 durch das Gewicht 24 beziehungsweise das exzentrische Gewicht 24 infolge der Gewichtskraft gebremst wird. Das funktioniert optimaler Weise bei einer horizontalen Anordnung des rotierenden Elements 10, da so die Gewichtskraft G maximal bremst. Bei der senkrechten Anordnung bremst die Gewichtskraft G des Gewichtes 24 (nicht zwingend exzentrisch angeordnet) insbesondere durch die Trägheit bei Rotationsänderungen der Rotation R. Alternativ kommen auch andere Bremsmethoden, wie zum Beispiel eine magnetische Bremsung, eine Wirbelstrombremsung, oder eine aerodynamische beziehungsweise hydrodynamische Bremsung, zur Anwendung. Beispielsweise kann statt dem Gewicht 24 ein Flügelrad vorhanden sein, das die in dem rotierenden Element 10 vorhandene Luft zur Bremsung nutzt. Besonders effizient ist diese aerodynamische Bremse, wenn beispielsweise die Umgebungsluft vorhanden ist, das heißt also, wenn der statische Körper nicht im Inneren des rotierenden Elements 10, sondern auf der Außenseite des rotierenden Elements angeordnet ist. Die Effizienz der aerodynamischen Bremse nimmt mit zunehmender Drehzahl zu. Umgekehrt ist es bei der oben angesprochenen Bremsung auf Basis der exzentrischen Gewichtskraft, da hier die Bremskraft mit zunehmender Drehzahl abnimmt. Insofern wäre entsprechend einer bevorzugten Variante eine Kombination von aerodynamischer und gravitatorischer Bremsung denkbar. Auch wären andere Kombinationen mit anderen Bremsmitteln denkbar. Ein weiteres Bremsmittel ist zum Beispiel eine magnetische Bremsung. Hierbei wird anstelle des Gewichts 24 ein Magnet verwendet, der beispielsweise mit einem externen Magnetfeld oder mit einem externen metallischen Körper, wie zum Beispiel einer Karosserie, interagiert. Auch sind Wirbelstrombremsen möglich.

Bezüglich der Anordnung aus Fig. 1 sei ferner darauf hingewiesen, dass das Vorsehen des statischen Körpers 14 zusammen mit dem Gewicht 24 im inneren der Hohlwelle 12 deshalb vorteilhaft ist, da so eine Verkapselung gegenüber Extern gebildet wird, was Probleme mit Komponenten im umliegenden Bauraum und mit Verschmutzung der Mechanik des rotorischen Elements 10 vermeidet.

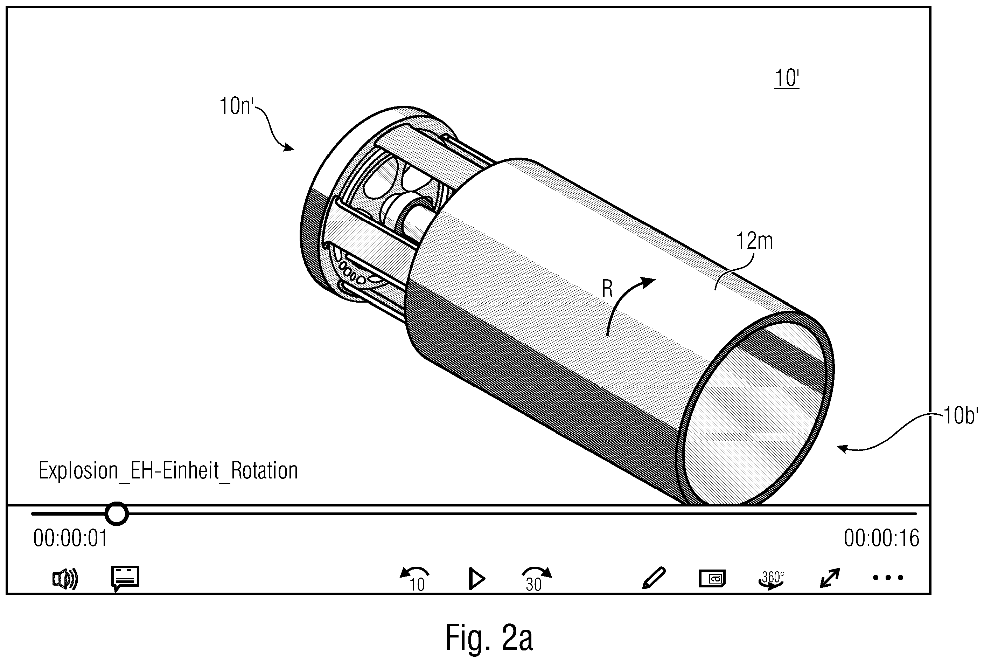

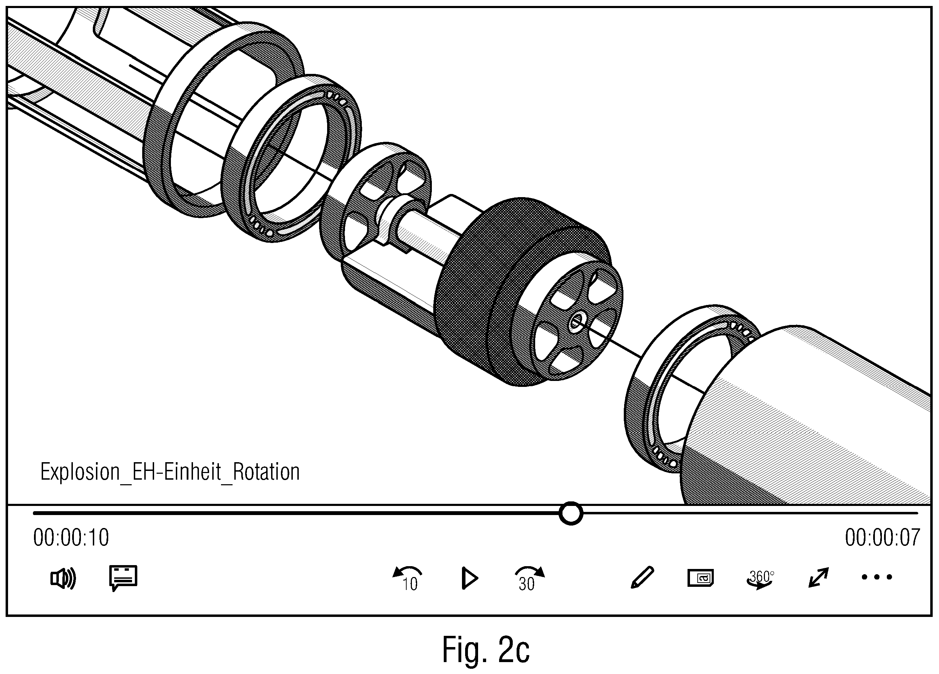

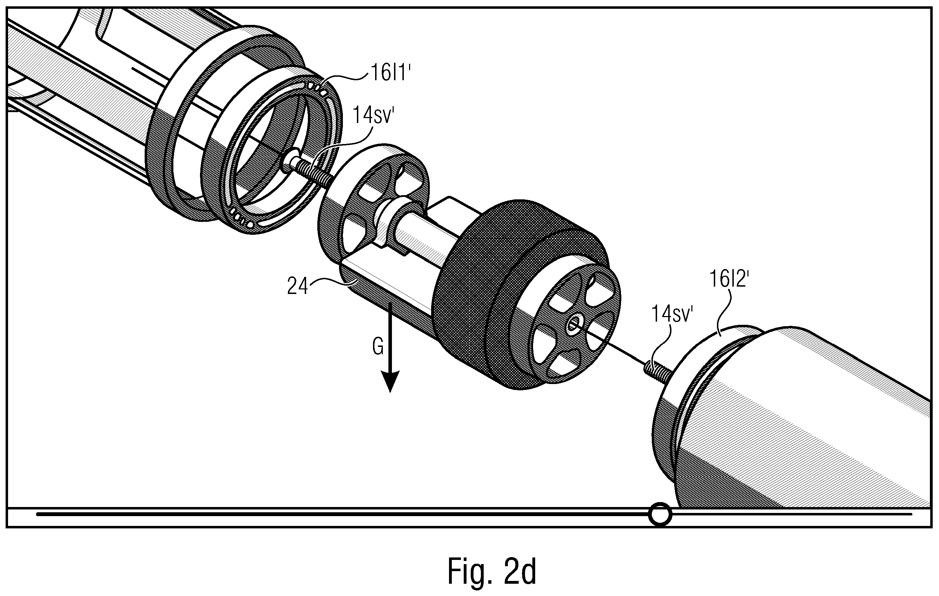

Nachfolgend wird Bezug nehmend auf Fig. 2a-e ein erweitertes Ausführungsbeispiel mit einer Gravitationsbremse erläutert.

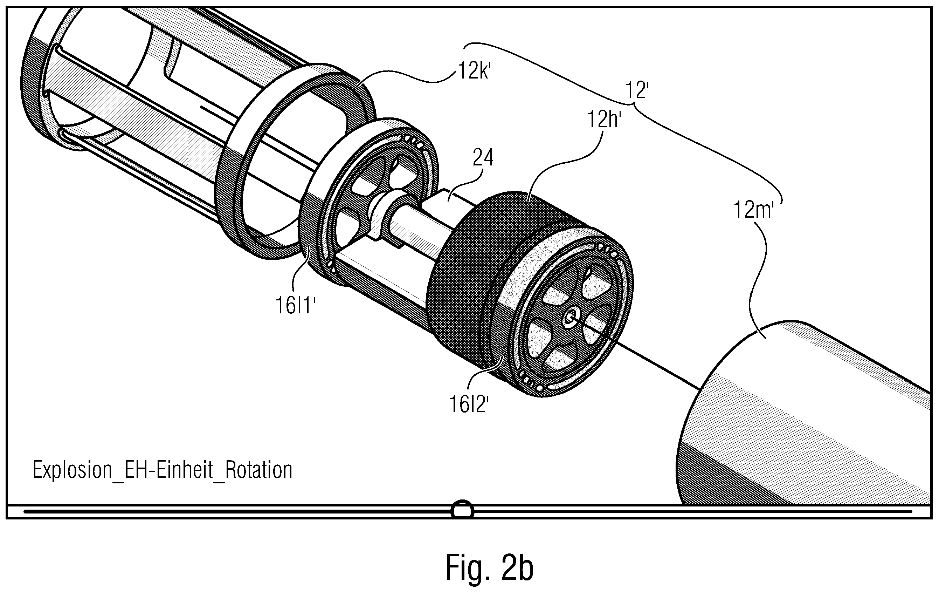

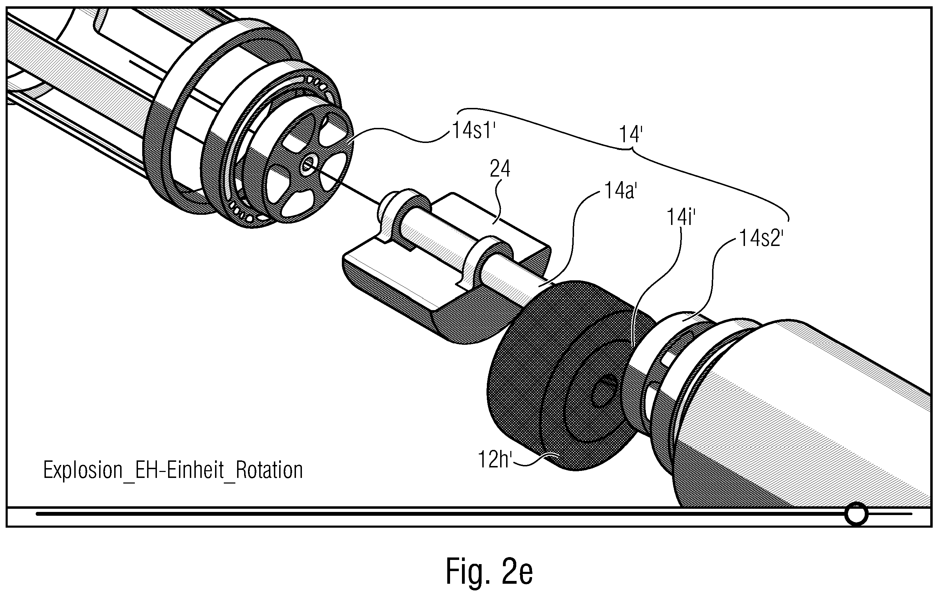

In den Fig. 2a bis 2e ist ein rotierendes Element 10' in fünf verschiedenen Explosionszeichnungen dargestellt. Bei diesem rotierenden Körper 10' ist wiederum eine Einteilung in statischer Körper 14' und rotierender Körper 12' möglich. Beispielsweise sind die wesentlichen rotierenden Elemente (vgl. Bezugszeichen 12') in Fig. 2b dargestellt. Diese sind eine Mantelfläche 12m', ein Käfig 12k', der sich entlang der Mantelfläche 12m' des rotierenden Körpers 10' erstreckt sowie eine Hülse 12h', in welcher die Elektronik (umfassend Induktivitäten 18 und Verbraucher 20) oder die Magnete 22 angeordnet sein können. Innerhalb dieser Hülse 12h' ist, z. B. konzentrisch, ein weiterer Teil 14i' angeordnet, wie beispielsweise Fig. 2e zeigt. Dieser weitere Teil 14i' ist Teil des statischen Körpers 14'. Der statische Körper umfasst beispielsweise dazu noch eine Achse 14a', ein Gewicht beziehungsweise exzentrisches Gewicht 24 sowie zwei Scheiben 14s1 und 14s2. Darüber hinaus umfasst das rotierende Element 10' auch noch zwei Lager 16l1' und 16l2' sowie zwei Schrauben 14sr'.

Bei dem rotierenden Element 10' rotiert der rotierende Körper 12, z. B. um von der Seite 10a' nach 10b' ein Drehmoment zu übertragen. Das Drehmoment kann beispielsweise über die Mantelfläche durch einen Presssitz oder ähnlichem aufgebracht werden. Insofern ist der rotierende Körper 10' als eine Art Welle zu verstehen.

Zusammen mit dem Körper 10' rotieren die Elemente 12k', 12h' und 12m' sowie die äußere Lagerschale der Lager 16l1' und 16l2'. Diese Lager, z. B. Rollenlager, Kugellager, Gleitlager, magnetische Lager, dienen zur Lagerung des rotierenden Körpers 12' gegenüber dem statischen Körper 14'. Der statische Körper 14' wird beispielsweise durch das Gewicht 24 gebremst, so dass die Rotationsbewegungen R des rotierenden Körpers 12' sich nicht auf die Elemente des statischen Körpers 14' übertragen. Beispielsweise erfolgt das Bremsen dadurch, dass das rotierende Element 10' in etwa waagrecht eingebaut ist und die Gewichtskraft G auf dem rotierenden Körper 24 dazu führt, dass hier eine Rotation verhindert beziehungsweise zumindest gehemmt wird.

Der Körper 14', der auch den Körper 24 umfasst, ist wie folgt aufgebaut: die Achse 14a' verbindet den inneren Teil der Buchse 14i' mit dem Gewicht 24. Beide können beispielsweise draufgeschrumpft oder anders mit der Achse 14a' befestigt sein. Hierdurch sind diese zwei Teile 24 und 14i' nebeneinander angeordnet und fest gekoppelt, so dass diese dieselbe Rotation ausüben. Die Achse 14a' ist weiter über die Schrauben 14sr' mit den Scheiben 14s1' und 14s2' auf den zwei Stirnseiten der Achse 14a' verbunden. Dadurch bewegen sich diese Elemente 14s1', 24, 14a', 14i' und 14s2' gemeinsam. Die Scheiben 14s1' und 14s2' sind wiederum mit den Innenschalen des Lagers 16l1' und 16l2' verbunden, z. B. durch einen Schrumpfsitz, so dass hier der gesamte Körper 14' gegenüber dem Körper 12' gelagert ist.

Infolge des gegenüber der Bewegung r des rotierenden Elements 12' gebremsten Elements 14' stellt sich eine Relativbewegung zwischen den zwei Elementen 12' und 14' und damit auch eine Relativbewegung zwischen den zwei Elementen 14i' und 12h' ein. Eines dieser zwei Elemente 14i' und 12h' trägt Verbraucher und Induktivitäten, während das andere Element Magnete trägt. Dadurch wird erreicht, dass die Induktivitäten sich in dem Magnetfeld bewegen, was zu einer Induktion eines Stromes in den Induktivitäten führt. Die Induktivitäten harvesten folglich eine elektrische Energie, die dann an den Verbraucher abgegeben werden kann. Dadurch ist der Verbraucher unabhängig von jeglicher Verkabelung mit extern betreibbar. An dieser Stelle sei nochmal darauf hingewiesen, dass es unabhängig ist, ob der Verbraucher und die Induktivitäten in dem rotierenden Element 12h' oder dem statischen Element 14i' angeordnet sind.

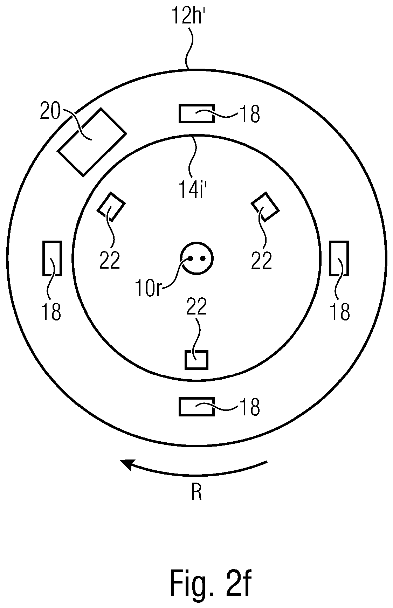

Bezug nehmend auf Fig. 2f wird nun eine mögliche Anordnung von Magneten 22 sowie Spulen 18 erläutert. Wie oben bereits erläutert, sind die Spulen 18 sowie die Magnete 22 in den zwei konzentrischen Elementen 12h' und 14i' angeordnet. Das Element 12h' ist das äußere Element und das Element 14i' das innere Element. Beide können beispielsweise eine Zylinderform aufweisen und konzentrisch zueinander angeordnet sein. Das innere Element 14i' trägt in diesem Ausführungsbeispiel drei Magnete 22, die tangential um die Rotationsachse 10r angeordnet sind. Die drei Magnete 22 sind beispielsweise gleich verteilt, das heißt also, in einem 120°-Winkel zueinander angeordnet. Ebenfalls translatorisch um die Rotationsachse 10r sind die Spulen 18 angeordnet, wobei diese in dem Element 12h' vorgesehen sind. Hier sind beispielsweise vier Spulen angeordnet, wobei sich entsprechend Ausführungsbeispielen deren Wickelrichtung senkrecht zu der Rotationsachse 10r erstrecken kann. In axialer Sicht sind die Spulen 18 und Magnete 22 so angeordnet, dass das Magnetfeld der Magnete 22 sich so ausbreitet, dass sich die Spulen 18 bei Rotation R durch das Magnetfeld bewegen. Insofern sind sie in axialer Richtung gesehen an einer vergleichbaren Position, das heißt also, in einem gemeinsamen Bereich angeordnet. Irgendwo in dem Element 12h' ist ferner der Verbraucher 20 eingebettet, der durch die Induktivitäten 18 mit Energie versorgt wird, sobald eine Rotation R vorliegt.

An dieser Stelle sei darauf hingewiesen, dass die Energieversorgung durch die Induktivitäten 18 auch durch eine Energieversorgungsschaltung, die beispielsweise einen Gleichrichter, Kondensator, Akku und/oder andere Puffermittel umfasst, erweitert sein kann. Diese Energieversorgungsschaltung ermöglicht einen kontinuierlichen Betrieb, unabhängig von Drehzahlhöhe oder sogar einen fortgesetzten Betrieb nach Stillstand des rotierenden Elements 10'.

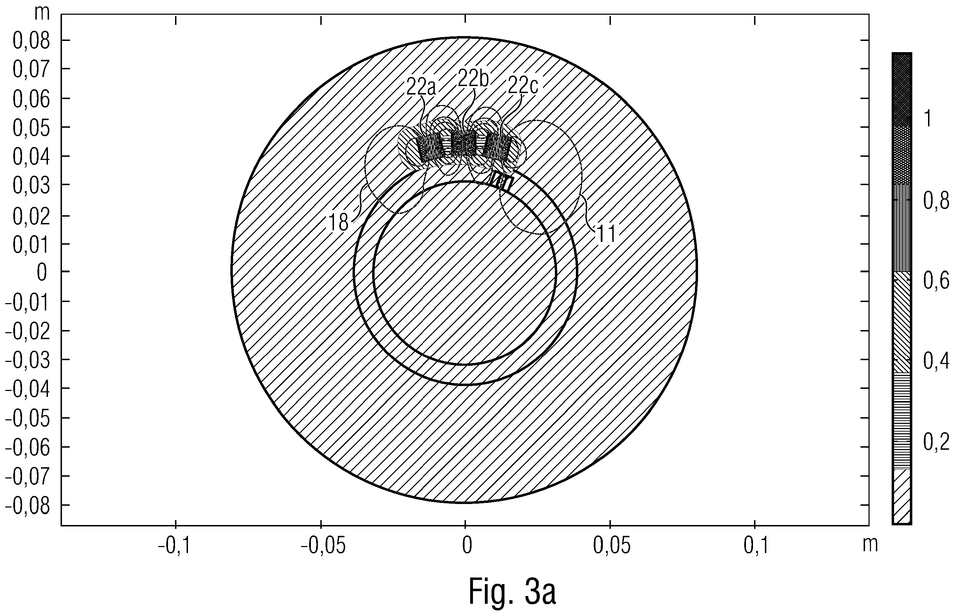

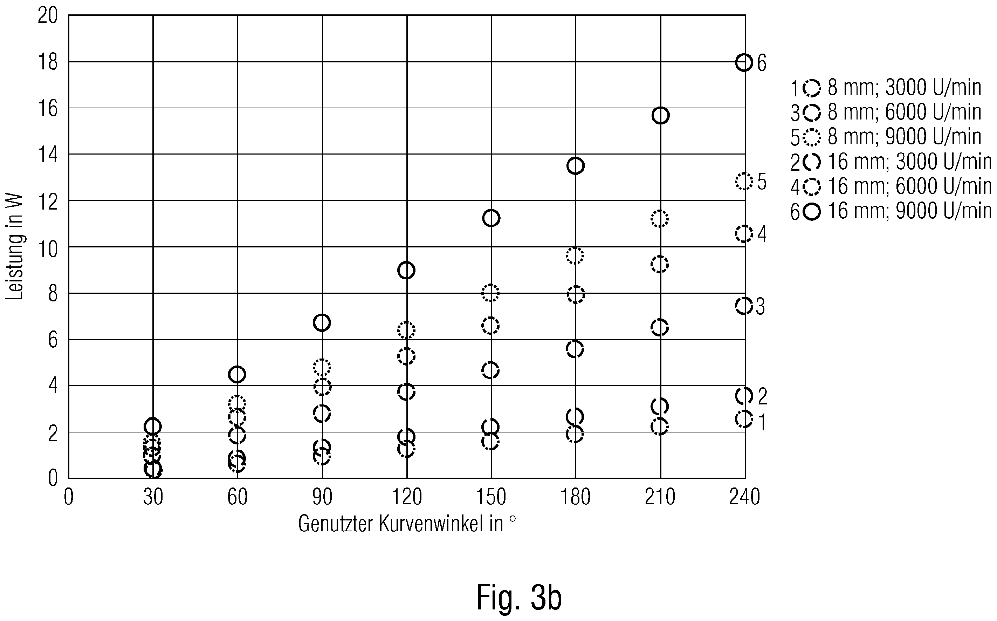

Bezug nehmend auf Fig. 3a und 3b wird nun erläutert, wie die Induktivitäten 18 translatorisch um die Rotationsachse 10r sowie die Magnete 22 translatorisch um die Rotationsachse 10r angeordnet sind. Wenn man beispielsweise von zwei oder drei Spulen 18 ausgeht, so erstreckt sich also der jeweilige Spulenkern entsprechend einem Ausführungsbeispiel senkrecht zu der Rotationsachse 10r. Bevorzugter Weise sind bei zwei Spulen dann die Achsen der Spulen im 180°-Winkel angeordnet, während bei drei Spulen dann eine 120°-Anordnung möglich wäre. Über die Anzahl der Spulen lässt sich der unterschiedliche Energiebedarf anpassen. Somit kann bei einem kleinen rotierenden Element 10' mit den gleichen Magneten 22 eine niedrigere Energie geharvestet werden, als mit einem großen rotierenden Element, bei welchem mehr Spulen integriert werden und der größere Radius zu höheren Geschwindigkeiten führt. Entsprechend weiteren Ausführungsbespielen wäre alternativ oder additiv auch eine Dimensionierung der Spule variierbar. Eine weitere Variationsmöglichkeit, um die effektive elektrische Leistung zu variieren, besteht in der Anordnung und Dimensionierung der Magnete 22. In Fig. 3b ist die effektive Leistung in einer Spule für unterschiedliche Drehzahlen in unterschiedlichen Magnethöhen mit insgesamt sechs Diagrammen dargestellt. Ein weiterer Variationsfaktor (vgl. X-Achse) ist die Anzahl der genutzten Kurvenwinkel. Hierbei wird davon ausgegangen, dass die Magnete über verschiedene Kurvenwinkel angebracht sind. Wie zu erkennen ist, nimmt die abgegebene Leistung mit der Nutzung von zusätzlichen Kurvenwinkeln zu. Ebenso nimmt die elektrische Leistung mit höheren Drehzahlen zu. Ebenso nimmt die elektrische Leistung mit der Magnethöhe zu. Wenn man beispielsweise davon ausgeht, dass je Spule beispielsweise 18 Watt (vgl. 16 mm-Magnet bei 9000 Umdrehungen und genutzten Kurvenwinkeln von 240°) generiert werden, so kann bei der Verwendung von 18 Spulen eine Leistung von bis zu 324 Watt oder allgemein bis zu 200 Watt oder über 200 Watt geharvestet werden.

An dieser Stelle sei angemerkt, dass nicht nur der ausgenutzte Raumwinkel entscheidend ist, sondern auch die Anzahl der Magnete. Hier wurde davon ausgegangen, dass zwölf Magnete bei 240° Raumwinkel verwendet werden. Selbstverständlich ist auch eine andere Zahl denkbar. Ferner ist auch ein Raumwinkel von > 240°, z. B. 360°, denkbar. Alle diese Faktoren tragen dazu bei, die elektrisch übertragene Leistung entsprechend skalieren zu können.

An dieser Stelle sei auch darauf hingewiesen, dass die Magnete nicht beliebig eng aneinander angeordnet werden können, wie in Bezug auf Fig. 3a deutlich wird.

Fig. 3a zeigt eine Sicht in axialer Richtung auf die Magnete 22a, 22b und 22c, die mit einer Spule 18 interagieren. Die Magnete 22a, 22b und 22c bilden jeweils Magnetlinien M aus, die hier über die Fläche entsprechend dargestellt sind. In dem Magnetfeld M bewegt sich die Spule, die tangential in dem Werkzeughalter aus Eisen angeordnet ist. Die Spule kann beispielsweise einen Ferritkern aufweisen. Über die Graustufen ist die magnetische Flussdichte gezeigt, wobei die weißen Linie das magnetische Vektorpotenzial in Z-Richtung (in Wb/m) darstellen.

Fig. 3b zeigt den Betrag der Flussdichte. Bei dem Ausführungsbeispiel aus Fig. 3b wird davon ausgegangen, dass die Magnete abwechselnd orientiert sind, was die magnetische Flussänderung maximiert. Auch weitere Anordnungen/Ausrichtungen wären denkbar, beispielsweise in Form eines Halbach Arrays, was den magnetischen Fluss im Bereich der Induktivitäten maximieren würde oder eine gleich orientierte Anordnung.

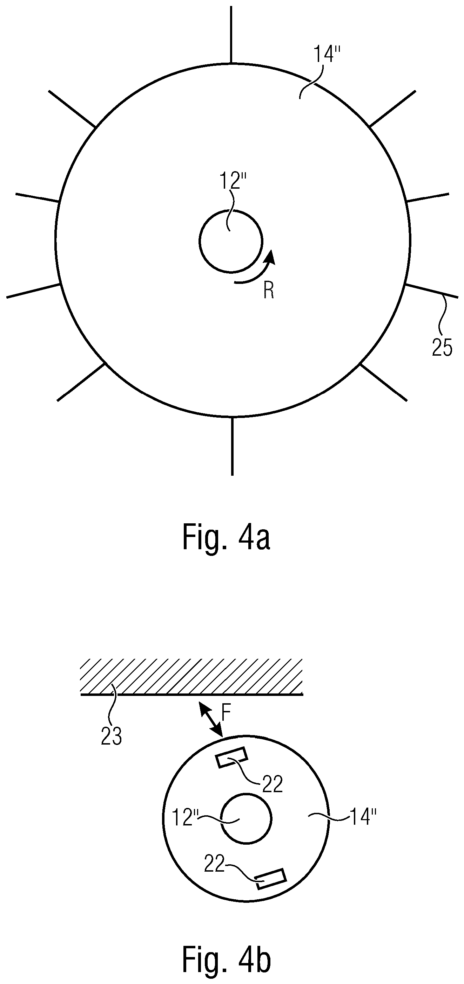

Bei obigen Ausführungsbeispielen wurde davon ausgegangen, dass das statische Element 14 durch ein Gewicht 24 gebremst wird. Bezug nehmend auf Fig. 4a wird eine weitere Bremsvariante erläutert.

Hierbei sind das statische Element 14" und das rotierende Element 12" wiederum konzentrisch angeordnet, wobei das rotierende Element 12" im Inneren angeordnet ist und das statische Element 14" im Äußeren. Das statische Element 14" ist gegenüber dem Element 12" derart gelagert, dass bei Rotation des Elements 12" möglichst wenig Drehmoment auf das statische Element 14" übertragen wird. Um das Element 14" zu bremsen, weist dieses eine aerodynamische Bremse 15 auf. Diese ist beispielsweise als eine Art Windrad geformt, so dass diese auf der Außenseite des Elements 14" (beispielsweise eine Zylinderform) eine Art Turbinenschaufeln beziehungsweise Verwirbelungsschaufeln 25 aufweist. Mit zunehmender Drehzahl nimmt auch der Luftwiderstand zu, so dass bei Rotation R zwar das äußere Element 14" bedingt dem inneren Element 12" folgt, aber mit zunehmender Rotationsgeschwindigkeit abgebremst wird. An dieser Stelle sei darauf hingewiesen, dass es sich nicht zwingend um eine aerodynamische Bremse 25 handeln muss, sondern, allgemein gesprochen, eine fluiddynamische Bremse mit einem Fluid als umgebendes Medium denkbar wäre.

Wenn man entsprechend weiteren Ausführungsbeispielen davon ausgeht, dass das statische Element 14" die Magnete 22 trägt, so kann jeder Magnet 22 mit der Umgebung interagieren und zum Beispiel eine Magnetkraft F mit einem Element in der Umgebung, z. B. einem Metallteil oder einem weiteren Magneten 23, ausbilden, wie anhand von Fig. 4b dargestellt ist. Somit wird eine magnetische Bremse erreicht.

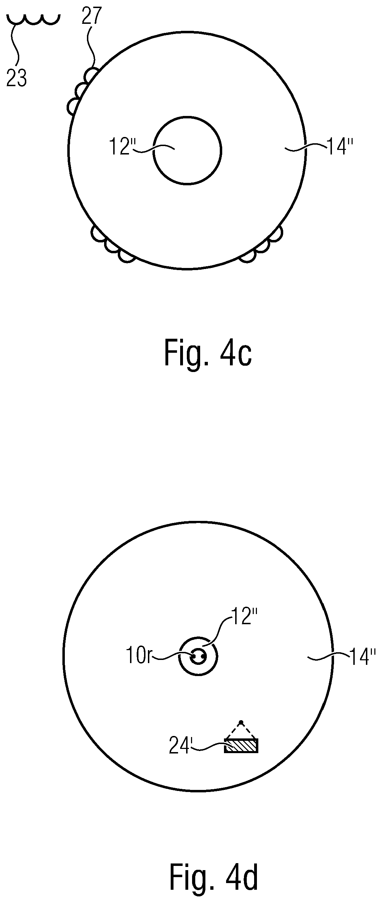

Bezug nehmend auf Fig. 4c wird eine weitere Variante erläutert, bei welcher das statische Element 14" mit einer Wirbelstrombremse 27 ausgeführt ist, die ebenfalls mit einem externen Element 23 interagiert. Bei Rotation des statischen Elements 14" wird ein Strom induziert, der durch einen Wirbelstrom weiter abgebremst wird.

Im Zusammenhang mit Fig. 4d wird eine weitere Variante erläutert. Hier wird davon ausgegangen, dass das statische Element 14" mit einem exzentrisch angeordneten Gewicht 24 ausgeführt ist. Dieses Gewicht 24 ist gegenüber dem Element 14" gelagert, aber exzentrisch in Bezug auf die Rotationsachse 10r angeordnet, so dass hier eine Gewichtskraft ausgebildet wird.

An dieser Stelle sei nochmal darauf hingewiesen, dass es unabhängig ist, ob der statische Körper 14" sich im äußeren Ring um die Rotationsachse 10r befindet oder im inneren Bereich, wie hier der rotierende Körper 14.

Weitere Ausführungsbeispiele schaffen eine Kupplung. Bei dieser Kupplung können mehrere Eingriffnahmeabschnitte, sowohl auf Antriebs- als auch auf Abtriebsseite ausgebildet werden. Unterschiedliche Befestigungsmittel, wie zum Beispiel über Schrauben, Klemmen, wären denkbar. Mögliche Implementierungen hängen davon ab, welches das rotierende Element ist (inneres oder äußeres) und wie hoch die zu übertragende Kraft ist.

Ein bevorzugtes Ausführungsbeispiel beschreibt Erzeugung elektrischer Energie aus Rotation mittels Stator, insbesondere die Erzeugung elektrischer Energie an einem rotierenden Objekt zur Versorgung von Funksensoren. Dafür wird eine Induktivität genutzt, die relativ zu einem festen Magnet bewegt wird. Die Induktivität besteht aus ein oder mehreren Drahtwindungen und ist mit einem Gleichrichter und einer Energieversorgungseinheit verbunden. Die Energieversorgungseinheit kann einen Sensor, Aktor oder ein Funkmodul versorgen. Der Sensor erfasst Information auf dem rotierenden Objekt und überträgt diese Informationen mittels Funkmodul drahtlos. Das Funkmodul kann auch Daten empfangen, um damit den Aktor anzusteuern. Das System kann beispielsweise auf Bohrern, Kupplungen oder Achsen eingesetzt werden.

Es sei darauf hingewiesen, dass die Induktivität und die ein oder mehrere Magneten einen Art Motor formen. Umgekehrt heißt das, dass die Induktivität und die Magneten entsprechend Ausführungsbeispielen durch einen Motor, wie z.B. einen DC-Motor realisiert sein können.

An dieser Stelle sei ferner darauf hingewiesen, dass obige Ausführungsbeispiele nur exemplarisch sind und der Schutzbereich durch die nachfolgenden Patentansprüche festgelegt wird.

### Bezugszeichen

Rotierendes Element (10, 10')
Rotierender Körper (12, 12',12")
Statischer Körper (14, 14', 14")
Verbraucher (20)
Induktivität (18)
Bewegung (r)
Magnetfeld (M)
Elektrische Energie (E)
Gewicht (24)
Rotationsachse (10r)
Erster Wellenverbinder (10a)
Zweiter Wellenverbinder (10b)
Magnetbremse (22)
Achse (10a')
Kugellager (16l1' und 16l2')
Wirbelstrombremse (27)
Verwirbelungsbremse (25)

## Patentansprüche

1. Kupplung oder Wellenverbindungsvorrichtung mit einem rotierenden Element (10, 10'), wobei das rotierende Element (10, 10') einen ersten Wellenverbinder (10a) auf einer ersten Stirnseite und einen zweiten Wellenverbinder (10b) auf einer zweiten Stirnseite aufweist, wobei das rotierende Element (10, 10') folgenden Merkmale aufweist:
einem rotierenden Körper (12, 12', 12");
einem statischen Körper (14, 14', 14');
wobei ein erster der zwei Körper eine Induktivität (18) und einen Verbraucher (20) aufweist und wobei die Induktivität (18) ausgebildet ist, bei Bewegung (r) gegenüber einem Magnetfeld (M) eine elektrische Energie (E) bereitzustellen, wobei der Verbraucher (20) durch die elektrische Energie (E) betreibbar ist;
wobei ein zweiter der zwei Körper ein oder mehrere Magnete aufweist, die ausgebildet sind, das Magnetfeld (M) bereitzustellen; und
wobei der statische Körper (14, 14', 14') gegenüber dem rotierenden Körper (12, 12', 12") derart gelagert ist, dass der statische Körper (14, 14', 14') bei Rotation des rotierenden Elements (10, 10') eine Relativbewegung gegenüber dem rotierenden Körper (12, 12', 12") ausführt;
wobei der statische Körper (14, 14', 14') mit einem Gewicht (24) und/oder einem exzentrischen Gewicht gekoppelt ist; wobei der statische Körper (14, 14', 14') sich im inneren Bereich des rotierenden Körpers (14) befindet und gegenüber dem rotierenden Körper (14) durch Lager (16l1' und 16l2') gelagert ist.

2. Kupplung oder Wellenverbindungsvorrichtung gemäß Anspruch 1, wobei das rotierende Element (10') in etwa waagrecht eingebaut ist; und/oder wobei das rotierende Element (10') in etwa waagrecht eingebaut ist und die Gewichtskraft (G) auf dem statischen Körper (14, 14', 14") dazu führt, dass hier eine Rotation verhindert beziehungsweise zumindest gehemmt wird.

3. Kupplung oder Wellenverbindungsvorrichtung gemäß Anspruch 2, wobei das Gewicht (24) und/oder das exzentrische Gewicht in dem rotierenden Körper (12, 12', 12") angeordnet sind oder außerhalb des rotierenden Körpers (12, 12', 12") angeordnet sind.

4. Kupplung oder Wellenverbindungsvorrichtung gemäß einem der vorherigen Ansprüche, wobei der statische Körper (14, 14', 14') mit einer Verwirbelungsbremse (25) gekoppelt ist, wobei die Verwirbelungsbremse (25) ausgebildet ist, durch eine aerodynamische oder eine hydrodynamische Interaktion gegenüber einer Rotation des rotierenden Elements (10, 10') gebremst zu werden; oder
wobei der statische Körper (14, 14', 14') mit einer Wirbelstrombremse (27) oder Magnetbremse (22) gekoppelt ist, wobei die Wirbelstrombremse (27) oder die Magnetbremse (22) ausgebildet ist, durch eine Interaktion oder magnetische Interaktion gebremst zu werden

5. Kupplung oder Wellenverbindungsvorrichtung gemäß einem der vorherigen Ansprüche, wobei ein Gewicht (24), ein exzentrisches Gewicht, eine Wirbelstrombremse (27), eine Magnetbremse (22) oder eine Verwirbelungsbremse (25) in axialer Richtung gesehen angrenzend zu dem statischen Körper angeordnet ist.

6. Kupplung oder Wellenverbindungsvorrichtung gemäß einem der vorherigen Ansprüche, wobei ein Gewicht (24), ein exzentrisches Gewicht, eine Wirbelstrombremse (27), eine Magnetbremse (22), eine Verwirbelungsbremse (25) und/oder der statische Körper (14, 14', 14') mittels Gleitlagern, Kugellagern (16l1' und 16l2'); magnetischen Lagern oder Lagern und/oder einer oder mehreren zusätzlichen Achsen (10a') in dem rotierenden Element (10, 10') gegenüber dem rotierenden Körper (12, 12', 12") gelagert sind.

7. Kupplung oder Wellenverbindungsvorrichtung gemäß einem der vorherigen Ansprüche, wobei der rotierende Körper (12, 12', 12") und der statische Körper (14, 14', 14') konzentrisch zueinander angeordnet sind.

8. Kupplung oder Wellenverbindungsvorrichtung gemäß einem der vorherigen Ansprüche, wobei der Verbraucher (20) eine Elektronik umfasst.

9. Kupplung oder Wellenverbindungsvorrichtung gemäß einem der vorherigen Ansprüche, wobei die Induktivität (18) mit einer Energieversorgungsschaltung gekoppelt ist, über die die elektrische Energie (E) bereitgestellt wird; oder
wobei die Induktivität (18) mit einer Energieversorgungsschaltung gekoppelt ist, über die die elektrische Energie (E) bereitgestellt wird, wobei die Energieversorgungsschaltung einen Gleichrichter und/oder einen Pufferspeicher und/oder einen Kondensator und/oder einen Akku aufweist.

10. Kupplung oder Wellenverbindungsvorrichtung gemäß einem der vorherigen Ansprüche, wobei der Verbraucher (20) eine Aktorik, einen Ultraschallaktor und/oder ein Stellglied aufweist; und/oder
wobei der elektrische Verbraucher (20) eine Sensorik aufweist, die ausgebildet ist, eine Information auszugeben; oder
wobei der elektrische Verbraucher (20) eine Sensorik aufweist, die ausgebildet ist, eine Information auszugeben, wobei die Sensorik ausgebildet ist, eine Kraft, eine Schwingung, eine Akustik, eine mechanische Spannung, eine Temperatur, ein Drehmoment, eine Drehzahl und/oder eine Beschleunigung zu detektieren; oder
wobei die Induktivität (18) ausgebildet ist, um als Sensorik zu fungieren und/oder ausgehend von einem induzierten Signal in der Induktivität (18) ein Messsignal bereitzustellen, das einen Rückschluss auf eine physikalische Größe, insbesondere eine Drehzahl oder Vibrationen zulässt.

11. Kupplung oder Wellenverbindungsvorrichtung gemäß einem der vorherigen Ansprüche, das ferner ein Funkmodul aufweist, das ausgebildet ist, eine in dem rotierenden Element (10, 10') gewonnene Information nach extern zu übermitteln.

12. Kupplung oder Wellenverbindungsvorrichtung gemäß einem der vorherigen Ansprüche, wobei die Induktivität (18) durch eine oder mehrere Spulen gebildet ist, oder
wobei die Induktivität (18) durch eine oder mehrere Spulen mit einem Ferritkern; oder
wobei die Induktivität (18) durch mehrere Spulen gebildet ist, die translatorisch um eine Rotationsachse (10r) des rotierenden Elements (10, 10') verteilt sind oder gleich verteilt sind; und/oder
wobei die bereitgestellte elektrische Energie (E) von der Anzahl der Induktivitäten (18) und/oder von der Dimension der Induktivitäten (18) und/oder des vorhandenen Magnetfeldes (M) abhängt.

13. Kupplung oder Wellenverbindungsvorrichtung gemäß einem der vorherigen Ansprüche, wobei mehrere Magnete vorgesehen sind, die rotorisch um den ersten der zwei Körper angeordnet sind; und/oder
wobei die Magnete eine abwechselnde Polarisierung aufweisen oder in Form eines Halbach-Arrays angeordnet sind; und/oder
wobei der Verbraucher (20) oder die Magnete (22) in einer Hülse (12h') angeordnet sind.

14. Kupplung oder Wellenverbindungsvorrichtung gemäß einem der vorherigen Ansprüche, wobei das rotierende Element eine Anzeige, insbesondere farbige Anzeige oder LED, die ausgebildet ist, eine Statusinformation oder farbkodierte Statusinformation auszugeben, oder wobei das rotierende Element (10, 10') eine Anzeige, insbesondere akustische Anzeige aufweist, die ausgebildet ist, eine Statusinformation oder akustische Statusinformation auszugeben.

15. System umfassend eine Achse (10a') mit einem ersten und einem zweiten Teil, sowie eine Kupplung oder Wellenverbindungsvorrichtung nach einem der vorherigen Ansprüche, wobei der erste und der zweite Teil mit der Kupplung oder Wellenverbindungsvorrichtung verbunden sind.

## Claims

1. A coupling or shaft connection device with a rotating element (10, 10'), wherein the rotating element (10, 10') comprises a first shaft connector (10a) on a first end face and a second shaft connector (10b) on a second end face, wherein the rotating element (10, 10') comprises:
a rotating body (12, 12', 12");
a static body (14, 14', 14');
wherein a first of the two bodies comprises an inductance (18) and a consumer (20), and wherein the inductance (18) is configured to provide electrical energy (E) upon movement (r) relative to a magnetic field (M), wherein the consumer (20) is operable by the electrical energy (E);
wherein a second of the two bodies comprises one or more magnets configured to provide the magnetic field (M); and
wherein the static body (14, 14', 14') is mounted relative to the rotating body (12, 12', 12") such that the static body (14, 14', 14') performs a relative movement relative to the rotating body (12, 12', 12") upon rotation of the rotating element (10, 10');
wherein the static body (14, 14', 14') is coupled to a weight (24) and/or an eccentric weight; wherein the static body (14, 14', 14') is located in the inner region of the rotating body (14) and is supported relative to the rotating body (14) by bearings (16l1' and 16l2').

2. The coupling or shaft connection device according to claim 1, wherein the rotating element (10') is installed approximately horizontally; and/or
wherein the rotating element (10') is installed approximately horizontally and the weight force (G) on the static body (14, 14', 14") results in a rotation being prevented or at least inhibited here.

3. The coupling or shaft connection device according to claim 2, wherein the weight (24) and/or the eccentric weight are arranged in the rotating body (12, 12', 12") or are arranged outside the rotating body (12, 12', 12").

4. The coupling or shaft connection device according to any of the preceding claims, wherein the static body (14, 14', 14') is coupled to a swirl brake (25), wherein the swirl brake (25) is configured to be braked by an aerodynamic or a hydrodynamic interaction relative to a rotation of the rotating element (10, 10'); or
wherein the static body (14, 14', 14') is coupled to an eddy current brake (27) or a magnetic brake (22), wherein the eddy current brake (27) or the magnetic brake (22) is configured to be braked by interaction or magnetic interaction.

5. The coupling or shaft connection device according to any of the preceding claims, wherein a weight (24), an eccentric weight, an eddy current brake (27), a magnetic brake (22) or a swirl brake (25) is arranged adjacent to the static body when viewed in an axial direction.

6. The coupling or shaft connection device according to any of the preceding claims, wherein a weight (24), an eccentric weight, an eddy current brake (27), a magnetic brake (22), a swirl brake (25) and/or the static body (14, 14', 14') are supported relative to the rotating body (12, 12', 12") by means of plain bearings, ball bearings (16l1' and 16l2'); magnetic bearings or bearings and/or one or more additional axles (10a') in the rotating element (10, 10').

7. The coupling or shaft connection device according to any of the preceding claims, wherein the rotating body (12, 12', 12") and the static body (14, 14', 14') are arranged concentrically to each other.

8. The coupling or shaft connection device according to any of the preceding claims, wherein the consumer (20) comprises electronics.

9. The coupling or shaft connection device according to any of the preceding claims, wherein the inductance (18) is coupled to an energy supply circuit via which the electrical energy (E) is provided; or
wherein the inductance (18) is coupled to an energy supply circuit via which the electrical energy (E) is provided, wherein the energy supply circuit comprises a rectifier and/or a buffer storage and/or a capacitor and/or a rechargeable battery.

10. The coupling or shaft connection device according to any of the preceding claims, wherein the consumer (20) comprises an actuator system, an ultrasonic actuator and/or an actuator; and/or
wherein the electrical consumer (20) comprises a sensor system configured to output information; or
wherein the electrical consumer (20) comprises a sensor system configured to output information, wherein the sensor system is configured to detect a force, vibration, acoustics, mechanical stress, temperature, torque, rotational speed and/or acceleration; or
wherein the inductance (18) is configured to operate as a sensor system and/or to provide, based on an induced signal in the inductance (18), a measurement signal allowing a conclusion to be drawn about a physical variable, in particular a rotational speed or vibrations.

11. The coupling or shaft connection device according to any of the preceding claims, further comprising a radio module configured to transmit information obtained in the rotating element (10, 10') externally.

12. The coupling or shaft connection device according to any of the preceding claims, wherein the inductance (18) is formed by one or more coils, or wherein the inductance (18) is formed by one or more coils with a ferrite core; or
wherein the inductance (18) is formed by several coils distributed translationally about an axis of rotation (10r) of the rotating element (10, 10') or distributed uniformly; and/or
wherein the electrical energy (E) provided depends on the number of inductances (18) and/or on the dimension of the inductances (18) and/or the magnetic field (M) present.

13. The coupling or shaft connection device according to any of the preceding claims, wherein several magnets are provided which are arranged rotorically around the first of the two bodies; and/or
wherein the magnets comprise an alternating polarization or are arranged in the form of a Halbach array; and/or
wherein the consumer (20) or the magnets (22) are arranged in a sleeve (12h').

14. The coupling or shaft connection device according to any of the preceding claims, wherein the rotating element comprises a display, in particular a colored display or LED, configured to output status information or color-coded status information, or wherein the rotating element (10, 10') comprises a display, in particular an acoustic display, configured to output status information or acoustic status information.

15. A system comprising an axle (10a') with a first and a second part, and a coupling or shaft connection device according to any of the preceding claims, wherein the first and second parts are connected to the coupling or shaft connection device.

## Revendications

1. Accouplement ou dispositif de raccordement d'arbres comprenant un élément rotatif (10, 10'), ledit élément rotatif (10, 10') comprenant un premier raccord d'arbre (10a) sur une première face frontale et un deuxième raccord d'arbre (10b) sur une deuxième face frontale, l'élément rotatif (10, 10') présentant les caractéristiques suivantes :
un corps rotatif (12, 12', 12");
un corps statique (14, 14', 14");
un premier des deux corps comprenant une inductance (18) et un consommateur (20), l'inductance (18) étant conçue pour fournir une énergie électrique (E) lors d'un mouvement (r) par rapport à un champ magnétique (M), le consommateur (20) pouvant être alimenté par cette énergie électrique (E);
un second des deux corps comprenant un ou plusieurs aimants conçus pour générer le champ magnétique (M); et
le corps statique (14, 14', 14") étant monté par rapport au corps rotatif (12, 12', 12") de telle sorte que le corps statique (14, 14', 14") effectue un mouvement relatif par rapport au corps rotatif (12, 12', 12") lors de la rotation de l'élément rotatif (10, 10');
le corps statique (14, 14', 14") étant couplé à une masse (24) et/ou à une masse excentrée; le corps statique (14, 14', 14") se trouvant à l'intérieur du corps rotatif (14) et étant monté par rapport au corps rotatif (14) au moyen de paliers (1611' et 1612').

2. Accouplement ou dispositif de raccordement d'arbres selon la revendication 1, dans lequel l'élément rotatif (10') est monté sensiblement à l'horizontale; et/ou
l'élément rotatif (10') étant monté sensiblement à l'horizontale, la force de pesanteur (G) agissant sur le corps statique (14, 14', 14") ayant pour effet d'empêcher, ou à tout le moins de freiner, une rotation de celui-ci.

3. Accouplement ou dispositif de raccordement d'arbres selon la revendication 2, dans lequel la masse (24) et/ou la masse excentrée sont disposées à l'intérieur du corps rotatif (12, 12', 12") ou à l'extérieur du corps rotatif (12, 12', 12").

4. Accouplement ou dispositif de raccordement d'arbres selon l'une quelconque des revendications précédentes, dans lequel le corps statique (14, 14', 14") est couplé à un frein à turbulence (25), le frein à turbulence (25) étant conçu pour être freiné par une interaction aérodynamique ou hydrodynamique opposée à la rotation de l'élément rotatif (10, 10'); ou
le corps statique (14, 14', 14") étant couplé à un frein à courants de Foucault (27) ou à un frein magnétique (22), le frein à courants de Foucault (27) ou le frein magnétique (22) étant conçu pour être freiné par une interaction ou par une interaction magnétique.

5. Accouplement ou dispositif de raccordement d'arbres selon l'une quelconque des revendications précédentes, dans lequel une masse (24), une masse excentrée, un frein à courants de Foucault (27), un frein magnétique (22) ou un frein à turbulence (25) est disposé, vu en direction axiale, adjacent au corps statique.

6. Accouplement ou dispositif de raccordement d'arbres selon l'une quelconque des revendications précédentes, dans lequel une masse (24), une masse excentrée, un frein à courants de Foucault (27), un frein magnétique (22), un frein à turbulence (25) et/ou le corps statique (14, 14', 14") sont montés dans l'élément rotatif (10, 10') par rapport au corps rotatif (12, 12', 12"), au moyen de paliers lisses, de roulements à billes (1611' et 1612'), de paliers magnétiques ou d'autres paliers et/ou d'un ou de plusieurs axes supplémentaires (10a').

7. Accouplement ou dispositif de raccordement d'arbres selon l'une quelconque des revendications précédentes, dans lequel le corps rotatif (12, 12', 12") et le corps statique (14, 14', 14") sont disposés concentriquement l'un par rapport à l'autre.

8. Accouplement ou dispositif de raccordement d'arbres selon l'une quelconque des revendications précédentes, dans lequel le consommateur (20) inclut une électronique.

9. Accouplement ou dispositif de raccordement d'arbres selon l'une quelconque des revendications précédentes, dans lequel l'inductance (18) est couplée à un circuit d'alimentation électrique par l'intermédiaire duquel l'énergie électrique (E) est fournie; ou
l'inductance (18) étant couplée à un circuit d'alimentation électrique par l'intermédiaire duquel l'énergie électrique (E) est fournie, le circuit d'alimentation électrique comportant un redresseur et/ou un dispositif de stockage tampon et/ou un condensateur et/ou un accumulateur.

10. Accouplement ou dispositif de raccordement d'arbres selon l'une quelconque des revendications précédentes, dans lequel le consommateur (20) comprend un système d'actionnement, un actionneur ultrasonore et/ou un organe de réglage; et/ou
le consommateur électrique (20) comprenant un système de capteurs configuré pour fournir une information; ou
le consommateur électrique (20) comprenant un système de capteurs configuré pour fournir une information, ledit système de capteurs étant configuré pour détecter une force, une vibration, un signal acoustique, une contrainte mécanique, une température, un couple, une vitesse de rotation et/ou une accélération; ou
l'inductance (18) étant conçue pour faire office de capteur et/ou pour fournir, à partir d'un signal induit dans l'inductance (18), un signal de mesure permettant de déduire une grandeur physique, notamment une vitesse de rotation ou des vibrations.

11. Accouplement ou dispositif de raccordement d'arbres selon l'une quelconque des revendications précédentes, comprenant en outre un module radio configuré pour transmettre vers l'extérieur une information obtenue dans l'élément rotatif (10, 10').

12. Accouplement ou dispositif de raccordement d'arbres selon l'une quelconque des revendications précédentes, dans lequel l'inductance (18) est formée par une ou plusieurs bobines, ou dans lequel l'inductance (18) est formée par une ou plusieurs bobines comportant un noyau en ferrite; ou
l'inductance (18) étant formée par plusieurs bobines qui sont réparties de manière translatoire autour d'un axe de rotation (10r) de l'élément rotatif (10, 10') ou réparties uniformément; et/ou
l'énergie électrique fournie (E) dépendant du nombre d'inductances (18) et/ou de la dimension des inductances (18) et/ou du champ magnétique (M) présent.

13. Accouplement ou dispositif de raccordement d'arbres selon l'une quelconque des revendications précédentes, dans lequel plusieurs aimants sont prévus, lesdits aimants étant disposés circonférentiellement autour du premier des deux corps; et/ou
les aimants présentant une polarisation alternée ou étant disposés sous la forme d'un réseau de Halbach; et/ou
le consommateur (20) ou les aimants (22) étant disposés dans un manchon (12h').

14. Accouplement ou dispositif de raccordement d'arbres selon l'une quelconque des revendications précédentes, dans lequel l'élément rotatif comprend un dispositif d'affichage, notamment un affichage coloré ou une DEL, configuré pour fournir une information d'état ou une information d'état codée par couleur, ou dans lequel l'élément rotatif (10, 10') comprend un dispositif d'affichage, notamment un affichage acoustique, configuré pour fournir une information d'état ou une information d'état acoustique.

15. Système incluant un arbre (10a') avec une première partie et une deuxième partie, ainsi qu'un accouplement ou un dispositif de raccordement d'arbres selon l'une quelconque des revendications précédentes, la première partie et la deuxième partie étant reliées à l'accouplement ou au dispositif de raccordement d'arbres.
